# EUROPÄISCHE PATENTSCHRIFT

(11) **EP 4 076 779 B1**
(45) Veröffentlichungstag und Bekanntmachung des Hinweises auf die Patenterteilung: **06.12.2023**
(21) Anmeldenummer: 20845374.6
(22) Anmeldetag: 16.12.2020
(51) Int. Cl.: B21D 5/00, G01B 11/02

(54) **BIEGEMASCHINE MIT EINER KONTROLLEINRICHTUNG**
BENDING MACHINE COMPRISING AN INSPECTION DEVICE
MACHINE À CINTRER POURVUE D'UN DISPOSITIF DE COMMANDE

(30) Priorität: 19.12.2019 AT 511332019
(43) Veröffentlichungstag der Anmeldung: 26.10.2022
(73) Patentinhaber: TRUMPF Maschinen Austria GmbH & Co. KG., 4061 Pasching (AT)
(72) Erfinder: KOHLBERGER, Christian, 4240 Freistadt (AT); LUSTIG, Stefan, 4060 Leonding (AT)
(74) Vertreter: Burger, Hannes
(86) Internationale Anmeldenummer: PCT/AT2020/060471
(87) Internationale Veröffentlichungsnummer: WO 2021/119704

(56) Entgegenhaltungen:
- EP-A1- 2 674 232
- WO-A1-2008/119090
- US-A- 5 531 087

## Beschreibung

Die Erfindung betrifft eine Vorrichtung und ein Verfahren zur Herstellung eines Bauteils durch Umformung eines Werkstücks aus Blech nach den Oberbegriffen der Ansprüche 1 und 7.

Bei der Fertigung von Bauteilen auf modernen Biegemaschinen bzw. Biegepressen ist auch bekannt, den Biegevorgang durch Einrichtungen zur Messung des Biegewinkels automatisiert zu überwachen und abhängig davon - durch ein Fertigungsprogramm der Steuervorrichtung - auch die Bewegung der Biegewerkzeuge zu steuern. So kann auch das Erreichen des gewünschten (End-)Biegewinkels an der Biegekante des Werkstücks automatisch festgestellt und der Biegevorgang dann von dem Fertigungsprogramm gestoppt werden. Für das Erfassen der räumlichen Lage der beiden Schenkel an der herzustellenden Biegekante werden vorteilhafterweise optisch bzw. berührungslos arbeitende Biegewinkel-Messvorrichtungen eingesetzt. Beispielsweise wird in dem Dokument US 5 531 087 eine Blechbiegemaschine zum Biegen eines Blechs, das zwischen ein oberes und ein unteres Biegewerkzeug eingelegt wird und bis zum Erreichen eines gewünschten Winkels gebogen wird, beschrieben. Während der Verformung des Blechs wird dabei durch eine Messlichtquelle eine Außenseite des Blechs optisch abgetastet, indem eine Linie, die sich mit einer Änderung des Biegewinkels des Blechs dreht, darauf projiziert wird. Mit einer Kamera werden davon Bilder aufgezeichnet und durch Auswertung dieser Bilder der erreichte Biegewinkel des Blechs berechnet. Die Ausbildung des gewünschten Biegewinkels kann so überwacht werden.

Um mit solchen Biegewinkel-Messvorrichtungen die Ausrichtung der Schenkel des Werkstücks mit ausreichender Genauigkeit detektieren zu können, ist eine ausreichend große Schenkellänge Voraussetzung. Der Bediener einer Biegemaschine muss sich also vor Beginn der Biegeumformung vergewissern, dass die optisch abtastende Biegewinkel-Messvorrichtung auch zuverlässig verwendet werden kann, d.h. dass die zu fertigende Schenkellänge nicht kleiner ist als der Wert einer minimalen Schenkellänge. Andernfalls muss er auf eine alternative Biegewinkel-Messmethode ausweichen. Die Werte der minimalen Schenkellängen zu unterschiedlichen Fertigungssituationen sind üblicherweise in Tabellen festgehalten und müssen von dem Bediener nachgelesen werden. Dabei kann es leicht zu Irrtümern und in weiterer Folge zum Anfall von Ausschussteilen kommen.

Die Aufgabe der vorliegenden Erfindung ist es, eine Vorrichtung und ein Verfahren zur Verfügung zu stellen, die/das einem Benutzer eine einfachere und weniger fehleranfällige Bedienung der Biegemaschine ermöglicht.

Die Aufgabe der Erfindung wird durch eine Vorrichtung zur Herstellung eines Bauteils durch Umformung eines Werkstücks aus Blech mit einer Biegemaschine mit zwei parallel zueinander ausgerichteten Pressbalken und mit einem unteren Biegewerkzeug und einem oberen Biegewerkzeug, die an den Pressbalken einander gegenüber liegend befestigt sind, gelöst. Diese Vorrichtung umfasst eine Kamera zur Aufnahme von Bildern eines Bearbeitungsbereichs zwischen den Biegewerkzeugen, eine Anzeigevorrichtung zur Darstellung von Bildern der Kamera, eine Steuervorrichtung mit einem Fertigungsprogramm zum Betreiben der Biegemaschine und eine Biegewinkel-Messvorrichtung, wobei die Steuervorrichtung einen Speicher mit Werten einer minimalen Schenkellänge zu unterschiedlichen Werten eines an dem Werkstück herzustellenden Biegewinkels und zu unterschiedlichen Biegewerkzeugen umfasst, und wobei die minimale Schenkellänge derjenige kleinste Wert einer rechtwinkelig bezüglich einer auszubildenden Biegekante gemessenen Schenkellänge des herzustellenden Bauteils ist, dessen Biegewinkel während der Umformung unter Verwendung der Biegewinkel-Messvorrichtung gemessen werden kann, und wobei die Steuervorrichtung ein Programm zur Bearbeitung von Bildinformationen umfasst, wobei das Programm zur Bearbeitung von Bildinformationen dazu ausgebildet ist, ein grafisches Längensymbol der dem Wert der minimalen Schenkellänge entsprechenden Länge zu erzeugen und gemeinsam mit dem Bild des Bearbeitungsbereichs maßstabsgetreu an der auszubildenden Biegekante auf der Anzeigevorrichtung darzustellen. Dies hat den Vorteil, dass für den Bediener, sobald das Werkstück an den Hinteranschlägen der Biegemaschine zur Anlage gekommen ist, unmittelbar erkennbar ist, ob die Biegeumformung unter Verwendung der Biegewinkel-Messvorrichtungen zuverlässig durchgeführt werden kann. Eine gesonderte Überlegung durch Vergleich irgendwelcher nummerischer Längenangaben, die erst in Tabellen nachzuschlagen sind, ist nicht mehr erforderlich.

Gemäß einer vorteilhaften Weiterbildung der Vorrichtung ist die Kamera - aus Sicht eines vor der Biegemaschine stehenden Beobachters - in einem hinter den Biegewerkzeugen liegenden Bereich der Biegemaschine angeordnet. Dies hat den Vorteil, dass dem Beobachter das für eine genaue Fertigung besonders wichtige Anlegen der Hinterkante des Werkstücks an den Hinteranschlägen auf einem Bildschirm gut sichtbar dargestellt werden kann.

Von Vorteil ist auch, wenn in dem vor den Biegewerkzeugen liegenden Bereich und in dem hinter den Biegewerkzeugen liegenden Bereich eine Kamera angeordnet ist, da dadurch der Bearbeitungsbereich zwischen den Biegewerkzeugen umfassend dargestellt werden kann.

Von Vorteil ist auch, wenn die Biegewinkel-Messvorrichtung der Vorrichtung ein berührungslos oder optisch arbeitendes Winkelmesssystem umfasst.

Gemäß einer weiteren Ausführungsform der Vorrichtung umfasst die Steuervorrichtung ein Auswerteprogramm zur Berechnung des Biegewinkels aus Messsignalen der Biegewinkel-Messvorrichtung.

Vorteilhaft ist auch die Weiterbildung, wonach die Biegewinkel-Messvorrichtung einen Laser zur Projektion einer Lichtlinie auf eine Oberfläche des Werkstücks und eine Kamera zur Erfassung der projizierten Lichtlinie umfasst, da damit die räumliche Lage und Ausrichtung der Werkstückschenkel mit großer Genauigkeit bestimmt werden kann.

Die Aufgabe der Erfindung wird eigenständig auch durch ein Verfahren zur Herstellung eines Bauteils durch Umformung eines Werkstücks aus Blech mit einer Biegemaschine mit zwei parallel zueinander ausgerichteten Pressbalken und mit einem unteren Biegewerkzeug und einem oberen Biegewerkzeug, die an den Pressbalken einander gegenüber liegend befestigt sind, wobei das Werkstück mit Hilfe eines Fertigungsprogramms und einer Steuervorrichtung bearbeitet wird, und wobei mit einer Biegewinkel-Messvorrichtung ein sich im Bereich einer Biegekante ausbildender Biegewinkel des Werkstücks gemessen wird, und wobei von einer Kamera Bilder eines Bearbeitungsbereichs zwischen den Biegewerkzeugen aufgezeichnet und die Bilder auf einer Anzeigevorrichtung dargestellt werden, gelöst. Dabei ist vorgesehen, dass durch ein Programm zur Bearbeitung von Bildinformationen ein graphisches Längensymbol erzeugt wird, das dem Wert einer minimalen Schenkellänge entspricht, wobei die minimale Schenkellänge denjenigen kleinsten Wert einer Schenkellänge des herzustellenden Bauteils angibt, dessen Biegewinkel unter Verwendung der Biegewinkel-Messvorrichtung gemessen und kontrolliert werden kann, wobei das graphische Längensymbol gemeinsam in dem Bild des Bearbeitungsbereichs maßstabsgetreu und rechtwinkelig zu der Biegekante angeordnet auf der Anzeigevorrichtung dargestellt wird.

Vorteilhafterweise werden die Werte der minimalen Schenkellänge aus einem Speicher entsprechend dem herzustellenden Bauteil ausgelesen.

Von Vorteil ist auch die Verfahrensweise, wonach von einer Bedienperson durch eine Eingabe an einem Bedienterminal ein Fertigungsprogramm der Steuervorrichtung ausgewählt wird und Hinteranschläge zur Ausrichtung des zu bearbeitenden Werkstücks und die Biegewinkel-Messvorrichtung durch das Fertigungsprogramm positioniert werden.

Gemäß einer vorteilhaften Verfahrensweise ist vorgesehen, dass die Bedienperson das Werkstück zwischen die Biegewerkzeuge einlegt und an den Hinteranschlägen ausrichtet und daran anschließend die Bedienperson auf der Grundlage des auf der Anzeigevorrichtung dargestellten Bildes und durch Vergleichen einer Lage einer Hinterkante des Werkstücks in dem dargestellten Bild mit dem graphischen Längensymbol feststellt, ob die Umformung unter Verwendung der Biegewinkel-Messvorrichtung ausgeführt werden kann.

Zum besseren Verständnis der Erfindung wird diese anhand der nachfolgenden Figuren näher erläutert.

Es zeigen jeweils in stark vereinfachter, schematischer Darstellung:
- Fig. 1: eine Biegemaschine in Seitenansicht, teilweise geschnitten dargestellt;
- Fig. 2: ein Detail der Biegemaschine gemäß Fig. 1;
- Fig. 3: eine Steuerung der Biegemaschine in schematisierter Darstellung;
- Fig. 4: ein Bild des Bearbeitungsbereichs der Biegemaschine wie am Bildschirm dargestellt;
- Fig. 5: das Bild des Bearbeitungsbereichs mit einem auf dem unteren Biegewerkzeug aufgelegten Werkstück;
- Fig. 6: das Bild des Bearbeitungsbereichs mit einem Werkstück mit kleiner Schenkellänge;
- Fig. 7: ein Detail des Bearbeitungsbereichs gemäß Fig. 1 mit einer alternativen Biegewinkel-Messvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

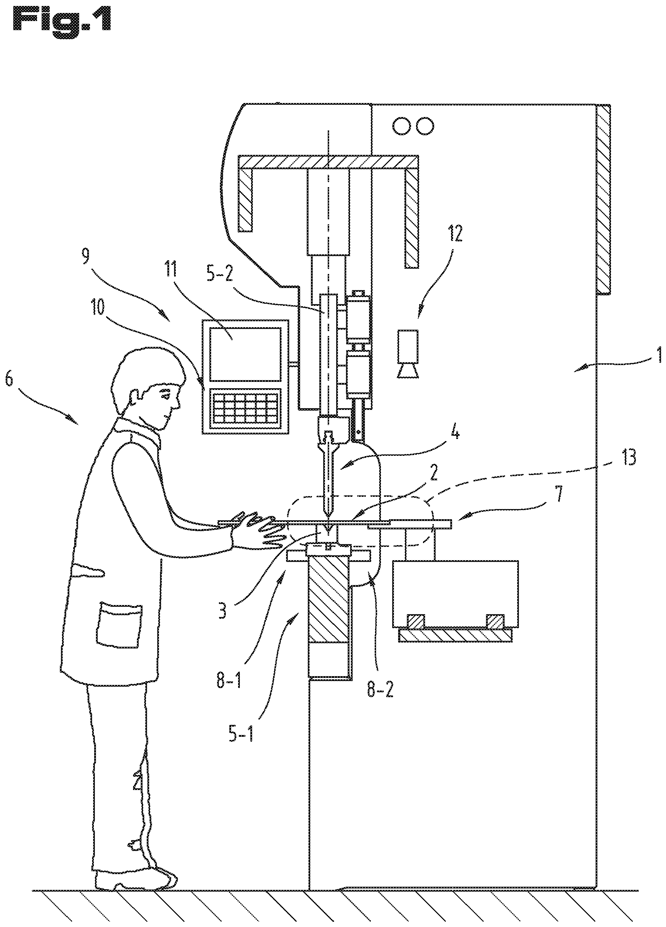

Die Fig. 1 zeigt exemplarisch eine Biegemaschine 1 in Seitenansicht und in schematisch vereinfachter Darstellung. Die Ansicht entspricht einem Schnitt durch die Biegemaschine 1, sodass der Blick auf deren innere Komponenten frei gegeben ist. Die Biegemaschine 1 ist geeignet zur Herstellung eines Bauteils durch Umformung eines Werkstücks 2 aus Blech. Dazu weist die Biegemaschine 1 ein unteres Biegewerkzeug 3 und ein oberes Biegewerkzeug 4 auf, die an zwei parallel zueinander ausgerichteten Pressbalken 5-1, 5-2 befestigt sind. In dem gezeigten Ausführungsbeispiel handelt es sich bei der Biegemaschine 1 um eine solche zum sogenannten Gesenkbiegen. Die beiden einander gegenüberliegend angeordneten Biegewerkzeuge 3, 4 werden durch Gegeneinanderbewegen der beiden Pressbalken 5-1, 5-2 beidseitig gegen das Werkstück 2 gedrückt und wird dabei eine Biegeumformung an dem Werkstück 2 ausgeführt. Dazu wird das Werkstück 2 von einer Bedienperson 6 auf das untere Biegewerkzeug 3 aufgelegt und durch Anlegen an zuvor geeignet positionierten Hinteranschlägen 7 ausgerichtet. Danach kann die Bedienperson 6 der Biegemaschine 1 den Startbefehl zum Absenken des oberen Pressbalkens 5-2 in Richtung auf den unteren Pressbalken 5-1 erteilen.

Das Ausmaß der Biegeumformung an dem Werkstück 2 wird vorzugsweise begleitend durch eine Biegewinkel-Messvorrichtung 8 überwacht.

Zum Betreiben der Biegemaschine 1 weist diese außerdem eine Steuervorrichtung 9 auf. Mit der Steuervorrichtung 9 stehen außerdem ein Bedienterminal 10 und ein Bildschirm 11 in Verbindung. Die Steuerung des Ablaufs einer Biegebearbeitung durch die Steuervorrichtung 9 erfolgt auf der Grundlage eines in der Steuervorrichtung 9 gespeicherten Fertigungsprogramms 21 für das herzustellende Bauteil. Die Bedienperson 6 kann dazu an dem Bedienterminal 10 das gewünschte Fertigungsprogramm 21 auswählen und somit der Steuervorrichtung 9 zu dessen Ausführung vorgeben. Darüber hinaus kann die Bedienperson an dem Bedienterminal 10 zusätzliche für die Ausführung der Biegebearbeitung erforderliche Parameter, wie beispielsweise die Dicke des zu bearbeitenden Werkstücks 2 eingegeben. An dem Bildschirm 11 können andererseits der Bedienperson 6 Mitteilungen über den Ablauf der Biegeumformung angezeigt werden. Die Biegemaschine 1 umfasst dazu insbesondere eine Kamera 12, durch die Bilder eines Bearbeitungsbereichs 13 aufgezeichnet werden. Die Kamera 12 ist dazu in einem - aus Sicht eines vor der Biegemaschine 1 stehenden Beobachters - hinter den Biegewerkzeugen 3, 4 liegenden Bereich bzw. im Inneren der Biegemaschine 1 angeordnet. Durch die Anzeige der von der Kamera 12 aufgezeichneten Bilder an dem Bildschirm 11 wird der Bedienperson 6 insbesondere die Kontrolle bei dem Einlegen des Werkstücks 2 zwischen die Biegewerkzeuge 3, 4 und beim Anlegen an den Hinteranschlägen 7 wesentlich erleichtert. Zusätzlich oder alternativ kann auch an der Vorderseite der Biegemaschine 1 eine Kamera angeordnet und auf den Bearbeitungsbereichs 13 gerichtet sein.

In einer Variante des Ausführungsbeispiels kann die Biegemaschine 1 auch jeweils mit zwei oder mehreren Kameras 12 ausgestattet sein, um so einen größeren Bearbeitungsbereich 13 erfassen und auf dem Bildschirm 11 darstellen zu können.

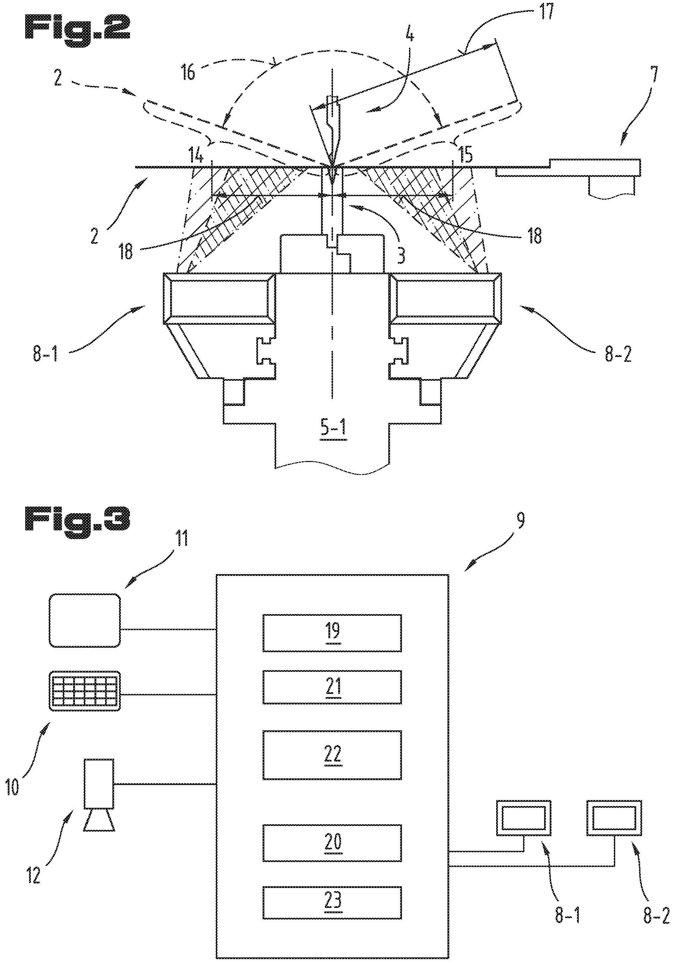

Die Fig. 2 zeigt ein Detail der Biegemaschine 1 gemäß Fig. 1 mit einer Seitenansicht auf den Bearbeitungsbereich 13. Das zunächst unverformte Werkstück 2 (als durchgezogene Linie dargestellt) ist an dem Hinteranschlag 7 anliegend ausgerichtet. Das in einer Biegeumformung befindliche und somit schon teilweise gebogene Werkstück 2 ist durch strichlierte Linien dargestellt.

Bei den beiden Biegewinkel-Messvorrichtungen 8-1, 8-2 handelt es sich um berührungslos bzw. optisch arbeitende Winkelmesssysteme - einer vorderen Biegewinkel-Messvorrichtung 8-1 und einer hinteren Biegewinkel-Messvorrichtung 8-2 - die auf eine Unterseite eines vorderen Schenkels 14 des Werkstücks 2 bzw. auf eine Unterseite eines hinteren Schenkels 15 des Werkstücks 2 gerichtet sind und mit deren Hilfe die räumlichen Lagen der beiden Schenkel 14, 15 vermessen werden können. Aus einem Vergleich der durch die Biegewinkel-Messvorrichtungen 8-1, 8-2 ermittelten Messwerte kann sodann in der Steuervorrichtung 9 mit einem entsprechenden Auswerteprogramm 22 ein Biegewinkel 16 zwischen den beiden Schenkeln 14, 15 des Werkstücks 2 berechnet werden. Während der fortschreitenden Biegeumformung des Werkstücks 2 kommt es an diesem zur Ausbildung einer Biegekante 28.

Die beiden Biegewinkel-Messvorrichtungen 8-1, 8-2 sind vorzugsweise mit einem Laser zur Projektion einer Lichtlinie auf eine Oberfläche und mit einem Detektor bzw. mit einer Kamera zur Erfassung dieser projizierten Lichtlinie ausgebildet. Bei einem Verschwenken der Schenkel 14, 15 des Werkstücks 2 verändert sich die relative Lage der Lichtlinie in den aufgezeichneten Bildern und kann daraus die Winkeländerung der Schenkel 14, 15 bestimmt werden.

Eine ausreichend zuverlässige Bestimmung des Biegewinkels 16 ist nur dann gewährleistet, wenn die zur Projektion einer Lichtlinie zur Verfügung stehende Schenkellänge 17 des Schenkels 15 des Werkstücks 2 ausreichend groß ist. Das heißt nur wenn die entsprechende Schenkellänge 17 - in Bezug auf die sich bildende Biegekante 28 - größer ist als der Wert einer minimalen Schenkellänge 18 kann eine Messung der Verformung des Werkstücks 2 mit Hilfe der Biegewinkel-Messvorrichtungen 8-1, 8-2 zuverlässig erfolgen.

Der Wert der minimalen Schenkellänge 18 ist vor allem abhängig von der Anordnung und Positionierung der Biegewinkel-Messvorrichtung 8-1, 8-2 relativ zu dem unteren Biegewerkzeug 3. Der Wert der minimalen Schenkellänge 18 wird aber auch noch mitbestimmt durch den Wert des an dem Werkstück 2 herzustellenden Biegewinkels 16 und im geringeren Maße auch noch durch die Bauart des unteren Biegewerkzeugs 3, das heißt vor allem durch die Breite der der Auflage des Werkstücks 2 dienenden oberen Stirnseite des unteren Biegewerkzeugs 3.

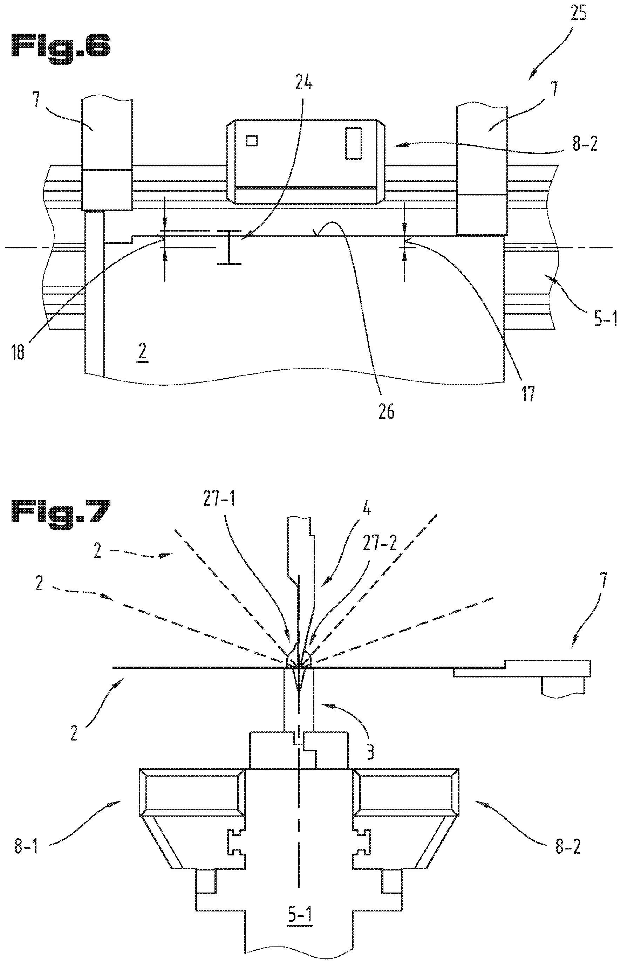

Bei der Vorbereitung einer Biegebearbeitung an dem Werkstück 2 stehen der Bedienperson 6 üblicherweise tabellarische Auflistungen von Werten der minimalen Schenkellänge 18 in Abhängigkeit von den genannten Parametern zur Verfügung. Die Bedienperson 6 muss also vor Beginn der Durchführung einer Biegeumformung anhand der für das herzustellende Bauteil zu erzielenden Schenkellänge 17 und dem Biegewinkel 16 kontrollieren, ob die Biegeumformung unter Verwendung der Biegewinkel-Messvorrichtungen 8-1, 8-2 ausgeführt werden kann. Kommt die Bedienperson 6 dabei zu dem Ergebnis, dass für eine solche der Wert der zu erreichenden Schenkellänge 17 geringer ist als der Wert der minimalen Schenkellänge 18, so wird sie für die Überwachung der Herstellung des gewünschten Biegewinkels 16 zu einer anderen Messmethode wechseln. Die Bedienperson könnte sich beispielsweise dazu entscheiden - so sie über ausreichende Erfahrung beim Umgang bzw. bei der Arbeit mit der Biegemaschine 1 verfügt - alleine durch visuelle Überwachung die Biegeumformung durchzuführen. Dabei kann es erforderlich sein, das Werkstück 2 nach einer manuellen Vermessung des Biegewinkels durch die Bedienperson 6 neuerlich zwischen die Biegewerkzeuge 3, 4 einzulegen und sich so schrittweise an den gewünschten Wert des Biegewinkels 16 heran zu tasten. Wesentlich effizienter und weniger zeitaufwändig wird es allerdings sein, wenn sich die Bedienperson 6 dazu entschließt, auf ein anderes Winkelmessverfahren auszuweichen, das ebenfalls geeignet ist, den erreichten Wert des Biegewinkels 16 während des Biegevorgangs selbst kontinuierlich überwachen zu können. Eine solche Messmethode wird nachstehend anhand der Fig. 7 beschrieben.

Die Fig. 3 zeigt eine schematisierte Darstellung der Steuervorrichtung 9 der Biegemaschine 1, die wichtigsten Elemente der Steuervorrichtung 9 als auch weitere Komponenten der Biegemaschine 1, mit der die Steuervorrichtung 9 in Signalverbindung steht. Die Steuervorrichtung 9 umfasst neben einer Zentralrecheneinheit 19 (CPU) ein Bilddatenverarbeitungsprogramm 20 für die Auswertung und die Darstellung der Bilder der Kamera 12 an dem Bildschirm 11. Das Fertigungsprogramm 21 und das Auswerteprogramm 22 für die von den Biegewinkel-Messvorrichtungen 8-1, 8-2 erhaltenen Messdaten stehen der Steuervorrichtung 9 ebenso zur Verfügung. In einem Speicher 23 sind schließlich auch Werte der minimalen Schenkellänge 18 abgespeichert.

Erfindungsgemäß ist bei der Biegemaschine 1 vorgesehen, dass die Steuervorrichtung 9 das Bilddatenverarbeitungsprogramm 20 zur Bearbeitung von Bildinformationen umfasst, wobei dieses dazu ausgebildet ist, eine grafische Repräsentanz bzw. ein graphisches Längensymbol 24 der dem Wert der minimalen Schenkellänge 18 entsprechenden Länge zu erzeugen und gemeinsam mit dem Bild der Kamera von dem Bearbeitungsbereich 13 auf der Anzeigevorrichtung 11 darzustellen.

Lediglich der Vollständigkeit halber sei an dieser Stelle angemerkt, dass die Steuervorrichtung 9 selbstverständlich auch mit dem motorischen Antrieb des oberen Pressbalken 5-2 in Wirkverbindung steht (Fig. 1) und auf Grundlage des Fertigungsprogramms 21 zumindest halbautomatisch die Erzeugung der erforderlichen Presskraft bzw. der Eindringtiefe des oberen Biegewerkzeugs 4 in die entsprechende Vertiefung des unteren Biegewerkzeugs 3 veranlasst. Vorzugsweise ist vorgesehen, dass auch der bzw. die Hinteranschläge 7 auf Grundlage des entsprechenden Fertigungsprogramms 21 für das herzustellende Bauteil motorisch verfahrbar eingestellt werden. Dies trifft auch auf die Positionierung der Biegewinkel-Messvorrichtungen 8-1, 8-2 zu.

In Vorbereitung einer Biegebearbeitung wird die Bedienperson 6 zunächst an der Tastatur bzw. dem Terminal 10 die erforderlichen Eingaben tätigen, um das für die Herstellung des gewünschten Bauteils erforderliche Fertigungsprogramm 21 aufzurufen. Das Fertigungsprogramm 21 enthält auch die Daten der erforderlichen Positionen der Hinteranschläge 7 und werden auf Grundlage dessen durch die Steuervorrichtung 9 die entsprechenden Positionierungen der Hinteranschläge 7 automatisch vorgenommen. Alternativ könnte die Bedienperson 6 die entsprechenden Eingaben an dem Terminal 10 auch einzeln vornehmen, indem Sie die Werte der gewünschten Schenkellänge 15, des gewünschten Biegewinkels 16 als auch der Dicke des Werkstücks 2 manuell eingibt.

Sobald die nötigen Einstellungen, insbesondere die Positionierung der Hinteranschläge 7 an der Biegemaschine 1 erfolgt sind, kann die Bedienperson 6 das Werkstück 2 in den Bearbeitungsbereich 13, das heißt auf das untere Biegewerkzeug 3, auflegen und an den Hinteranschlägen 7 ausrichten. Das Einlegen des Werkstücks 2 kann zusätzlich auch auf dem Bildschirm 11 beobachtet werden. Mit Hilfe des Bilddatenverarbeitungsprogramms 20 wird dabei durch die Steuervorrichtung 9 den Bildern 25 von der Kamera 12 das grafische Längensymbol 24 der minimalen Schenkellänge 18 überlagert und auf der Anzeigevorrichtung 11 maßstabsgetreu dargestellt.

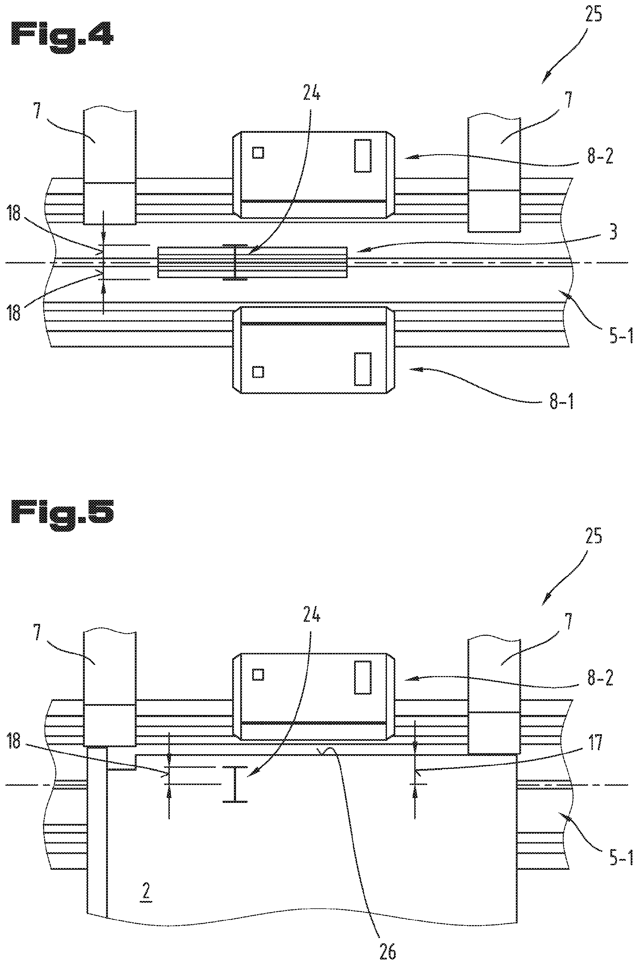

Die Fig. 4 zeigt ein solches von der Kamera 12 auf dem Bildschirm 11 dargestelltes Bild 25 gemeinsam mit der eingeblendeten, grafischen Repräsentanz 24 der minimalen Schenkellänge 18. Das grafische Längensymbol 24 ist dabei symmetrisch zu einer Längsachse des unteren Biegewerkzeugs 3 bzw. des unteren Pressbalkens 5-1 dargestellt (entspricht einer auszubildenden Biegekante 28 des Werkstücks 2). Das heißt das in diesem Ausführungsbeispiel durch einen einfachen Balken gebildete, grafische Längensymbol 24 zeigt das Ausmaß der minimalen Schenkellänge 18 sich nach beiden Seiten, symmetrisch zu dem unteren Biegewerkzeug 3 erstreckend an, wie es auch in Fig. 2 dargestellt ist. In der im Bild 25 gezeigten Situation ist das Werkstück 2 jedoch noch nicht in den Bearbeitungsbereich 13 eingelegt, sondern sind lediglich die Hinteranschläge 7 und die Biegewinkel-Messvorrichtungen 8-1, 8-2 geeignet positioniert gezeigt.

Ein auf dem unteren Biegewerkzeug 3 aufgelegtes Werkstück 2 wird in dem Bild 25 der Kamera 12, gemäß Fig. 5 gezeigt. Das Werkstück 2 befindet sich dabei bereits in einer an die Hinteranschläge 7 anliegenden Position und ist somit bereits ausgerichtet. Durch das Einblenden des grafischen Längensymbols 24 in das Bild 25 gemäß Fig. 5 ist es der Bedienperson 6 leicht möglich zu erkennen, dass eine Hinterkante 26 des Werkstücks 2 über den Bereich der minimalen Schenkellänge 18 nach hinten ausreichend übersteht und somit ein Wert der Schenkellänge 17 in diesem Fall größer ist als der Wert der minimalen Schenkellänge 18. Die Bedienperson 6 kann somit ohne weitere Verzögerung sofort der Steuervorrichtung 9 den Startbefehl zur Ausführung der Biegeumformung erteilen. Alleine die Überlagerung des grafischen Längensymbols 24 der minimalen Schenkellänge 18 in dem Bild 25 ist für die Bedienperson 6 ausreichend, um erkennen zu können, dass die begleitende Kontrolle und Bestimmung des Biegewinkels 16 in diesem Anwendungsfall alleine durch die beiden Biegewinkel-Messvorrichtungen 8-1, 8-2 zuverlässig überwacht werden kann.

Die Berechnung bzw. Dimensionierung und auch maßstabgerechnete Einblendung der grafischen Repräsentanz bzw. des grafischen Längensymbols 24 in das Bild 25 der Kamera 12 kann von der Steuervorrichtung 9 auf Grundlage der in dem Speicher 23 bereitgehaltenen Daten bzw. Werte der minimalen Schenkellängen 18 zu unterschiedlichen Biegewinkeln 16, mit Hilfe des Bilddatenverarbeitungsprogramms 20 automatisch durchgeführt werden. So das richtige Fertigungsprogramm 21 durch die Bedienperson ausgewählt worden ist bzw. die entsprechenden Daten für das gewünschte Bauteil an dem Bedienterminal 10 eingegeben worden sind, besteht für die Bedienperson 6 keine weitere Notwendigkeit sonstige eigene Berechnungen oder Kontrollarbeiten hinsichtlich einer ausreichenden Schenkellänge 17 vorzunehmen.

In einer vorteilhaften Weiterbildung der Biegemaschine 1 können auch mehrere solche grafischen Längensymbole 24 - entlang der Biegekante 28 versetzt - den Bildern überlagert und auf dem Bildschirm 11 dargestellt werden.

Im Unterschied zu dem anhand der Fig. 5 beschriebenen Anwendungsfall zeigt die Fig. 6 ein Bild 25 bei der Herstellung bzw. Biegeumformung eines anderen Bauteils aus einem Werkstück 2. Die Bedienperson 6 hat das entsprechende Werkstück 2 bereits in den Bearbeitungsbereich 13 eingelegt und durch Anlegen an die Hinteranschläge 7 ausgerichtet. Der in das Bild 25 eingeblendete Balken bzw. das grafische Längensymbol 24 lässt die Bedienperson 6 nun leicht erkennen, dass in diesem Fall die Schenkellänge 17 kleiner ist als die erforderliche minimale Schenkellänge 18 und somit die Verwendung der Biegewinkel-Messvorrichtungen 8-1, 8-2 für eine zuverlässige Durchführung der Beabsichtigten Biegeumformung nicht ausreichend ist. Die Bedienperson 6 wird in diesem Anwendungsfall auf eine alternative Methode zur Kontrolle der Herstellung des gewünschten Biegewinkels 16 ausweichen. Eine solche alternative Methode ist beispielsweise die Anwendung eines taktilen Verfahrens mit zwei Tastscheiben 27-1, 27-2, die an dem oberen Biegewerkzeug 4 vorgesehen sind, wie nachfolgend anhand der Fig. 7 beschrieben wird.

Die Fig. 7 zeigt ein Detail des Bearbeitungsbereichs 13 gemäß Fig. 1 mit einer mechanischen Biegewinkel-Messvorrichtung, in Seitenansicht dargestellt. Dabei sind an dem oberen Biegewerkzeug 4 beidseitig seitlich hervorstehende Tastscheiben 27-1, 27-2 vorgesehen, die jeweils gegen einen der beiden Schenkel 14, 15 des sich verformenden Werkstücks 2 federelastisch andrücken. In Folge des sich während der Biegeumformung verändernden Biegewinkels werden die beiden Tastscheiben 27-1, 27-2 mehr und mehr in das Innere des oberen Biegewerkzeugs 4 gedrückt. Die Verstellbewegung der Tastscheiben 27-1, 27-2 wird von entsprechenden Detektoren aufgezeichnet und kann aus den dabei erhaltenen Messsignalen der Biegewinkel 16 berechnet werden. Basierend auf dem so gemessenen Wert des Biegewinkels 16 kann die Steuervorrichtung 9 das Erreichen des gewünschten Endwerts des Biegewinkels 16 automatisch überwachen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Biegemaschine
- 2: Werkstück
- 3: Biegewerkzeug
- 4: Biegewerkzeug
- 5: Pressbalken
- 6: Bedienperson
- 7: Hinteranschlag
- 8: Biegewinkel-Messvorrichtung
- 9: Steuervorrichtung
- 10: Bedienterminal
- 11: Bildschirm
- 12: Kamera
- 13: Bearbeitungsbereich
- 14: Schenkel
- 15: Schenkel
- 16: Biegewinkel
- 17: Schenkellänge
- 18: minimale Schenkellänge
- 19: Zentralrecheneinheit
- 20: Bilddatenverarbeitungsprogramm
- 21: Fertigungsprogramm
- 22: Auswerteprogramm
- 23: Speicher
- 24: graphisches Längensymbol
- 25: Bild
- 26: Hinterkante
- 27: Tastscheibe
- 28: Biegekante

## Patentansprüche

1. Vorrichtung zur Herstellung eines Bauteils durch Umformung eines Werkstücks (2) aus Blech mit einer Biegemaschine (1) mit zwei parallel zueinander ausgerichteten Pressbalken (5-1, 5-2) und mit einem unteren Biegewerkzeug (3) und einem oberen Biegewerkzeug (4), die an den Pressbalken (5-1, 5-2) einander gegenüber liegend befestigt sind, und mit einer Kamera (12) zur Aufnahme von Bildern (25) eines Bearbeitungsbereichs (13) zwischen den Biegewerkzeugen (3, 4), und mit einer Anzeigevorrichtung (11) zur Darstellung von Bildern (25) der Kamera (12), und mit einer Steuervorrichtung (9) mit einem Fertigungsprogramm (21) zum Betreiben der Biegemaschine (1), und mit einer Biegewinkel-Messvorrichtung (8-1, 8-2), **dadurch gekennzeichnet, dass** die Steuervorrichtung (9) einen Speicher (23) mit Werten einer minimalen Schenkellänge (18) zu unterschiedlichen Werten eines an dem Werkstück (2) herzustellenden Biegewinkels (16) und zu unterschiedlichen Biegewerkzeugen (3, 4) umfasst, wobei die minimale Schenkellänge (18) derjenige kleinste Wert einer rechtwinkelig bezüglich einer auszubildenden Biegekante (28) gemessenen Schenkellänge (17) des herzustellenden Bauteils ist, dessen Biegewinkel (16) zu einem jeden Zeitpunkt der Umformung unter Verwendung der Biegewinkel-Messvorrichtung (8-1, 8-2) gemessen werden kann, und dass die Steuervorrichtung (9) ein Programm (20) zur Bearbeitung von Bildinformationen umfasst, wobei das Programm (20) zur Bearbeitung von Bildinformationen dazu ausgebildet ist, ein grafisches Längensymbol (24) der dem Wert der minimalen Schenkellänge (18) entsprechenden Länge zu erzeugen und gemeinsam mit dem Bild (25) des Bearbeitungsbereichs (13) maßstabsgetreu an der auszubildenden Biegekante (28) auf der Anzeigevorrichtung (11) darzustellen.

2. Vorrichtung nach Anspruch 1, **dadurch gekennzeichnet, dass** die Kamera (12) aus Sicht eines vor der Biegemaschine (1) stehenden Beobachters (6) in einem hinter den Biegewerkzeugen (3, 4) liegenden Bereich der Biegemaschine (1) angeordnet ist.

3. Vorrichtung nach Anspruch 2, **dadurch gekennzeichnet, dass** in dem vor den Biegewerkzeugen (3, 4) liegenden Bereich und in dem hinter den Biegewerkzeugen (3, 4) liegenden Bereich eine Kamera (12) angeordnet ist.

4. Vorrichtung nach einen der vorhergehenden Ansprüche, **dadurch gekennzeichnet, dass** die Biegewinkel-Messvorrichtung (8-1, 8-2) ein berührungslos oder optisch arbeitendes Winkelmesssystem umfasst.

5. Vorrichtung nach einen der vorhergehenden Ansprüche, **dadurch gekennzeichnet, dass** die Steuervorrichtung (9) ein Auswerteprogramm (22) zur Berechnung des Biegewinkels (16) aus Messsignalen der Biegewinkel-Messvorrichtung (8-1, 8-2) umfasst.

6. Vorrichtung nach einen der vorhergehenden Ansprüche, **dadurch gekennzeichnet, dass** die Biegewinkel-Messvorrichtung (8-1, 8-2) einen Laser zur Projektion einer Lichtlinie auf eine Oberfläche des Werkstücks (2) und eine Kamera zur Erfassung der projizierten Lichtlinie umfasst.

7. Verfahren zur Herstellung eines Bauteils durch Umformung eines Werkstücks (2) aus Blech mit einer Biegemaschine (1) mit zwei parallel zueinander ausgerichteten Pressbalken (5-1, 5-2) und mit einem unteren Biegewerkzeug (3) und einem oberen Biegewerkzeug (4), die an den Pressbalken (5-1, 5-2) einander gegenüber liegend befestigt sind, wobei das Werkstück (2) mit Hilfe eines Fertigungsprogramms (21) und einer Steuervorrichtung (9) bearbeitet wird, und wobei mit einer Biegewinkel-Messvorrichtung (8-1, 8-2) ein sich im Bereich einer Biegekante (28) ausbildender Biegewinkel (16) des Werkstücks (2) gemessen wird, und wobei von einer Kamera (12) Bilder (25) eines Bearbeitungsbereichs (13) zwischen den Biegewerkzeugen (3, 4) aufgezeichnet und die Bilder (25) auf einer Anzeigevorrichtung (11) dargestellt werden, **dadurch gekennzeichnet, dass** durch ein Programm (20) zur Bearbeitung von Bildinformationen ein graphisches Längensymbol (24) erzeugt wird, das dem Wert einer minimalen Schenkellänge (18) entspricht, wobei die minimale Schenkellänge (18) denjenigen kleinsten Wert einer Schenkellänge (17) des herzustellenden Bauteils angibt, dessen Biegewinkel (16) unter Verwendung der Biegewinkel-Messvorrichtung (8-1, 8-2) gemessen und kontrolliert werden kann, und dass das graphische Längensymbol (24) gemeinsam in dem Bild (25) des Bearbeitungsbereichs (13) maßstabsgetreu und rechtwinkelig zu der Biegekante (28) angeordnet auf der Anzeigevorrichtung (11) dargestellt wird.

8. Verfahren nach Anspruch 7, **dadurch gekennzeichnet, dass** Werte der minimalen Schenkellänge (18) aus einem Speicher (23) entsprechend dem herzustellenden Bauteil ausgelesen werden.

9. Verfahren nach Anspruch 7 oder 8, **dadurch gekennzeichnet, dass** von einer Bedienperson (6) durch eine Eingabe an einem Bedienterminal (10) ein Fertigungsprogramm (21) der Steuervorrichtung (9) ausgewählt wird und Hinteranschläge (7) zur Ausrichtung des zu bearbeitenden Werkstücks (2) und die Biegewinkel-Messvorrichtung (8-1, 8-2) durch das Fertigungsprogramm (21) positioniert werden.

10. Verfahren nach Anspruch 9, **dadurch gekennzeichnet, dass** die Bedienperson (6) das Werkstück (2) zwischen die Biegewerkzeuge (3, 4) einlegt und an den Hinteranschlägen (7) ausrichtet, und daran anschließend die Bedienperson (6) auf der Grundlage des auf der Anzeigevorrichtung (11) dargestellten Bildes (25) und durch Vergleichen einer Lage einer Hinterkante (26) des Werkstücks (2) in dem dargestellten Bild (25) mit dem graphischen Längensymbol (24) feststellt, ob die Umformung unter Verwendung der Biegewinkel-Messvorrichtung (8-1, 8-2) ausgeführt werden kann.

## Claims

1. A device for producing a component by forming a workpiece (2) from sheet metal, having a bending machine (1) with two press beams (5-1, 5-2) aligned parallel to one another and with a lower bending tool (3) and an upper bending tool (4) which are attached to the press beams (5-1, 5-2) opposite one another, and having a camera (12) for capturing images (25) of a processing region (13) between the bending tools (3, 4), and with a display device (11) for displaying images (25) of the camera (12), and with a controller (9) with a production program (21) for operating the bending machine (1), and with a bending angle measuring device (8-1, 8-2), **characterized in that** the controller (9) comprises a memory (23) with values of a minimum leg length (18) for different values of a bending angle (16) to be produced on the workpiece (2) and for different bending tools (3, 4), wherein the minimum leg length (18) is that smallest value of a leg length (17), measured perpendicularly with respect to a bending edge (28) to be formed, of the component to be produced, the bending angle (16) of which can be measured at any time of the forming using the bending angle measuring device (8-1, 8-2), and that the controller (9) comprises a program (20) for processing image information, wherein the program (20) for processing image information is configured to generate a graphical length symbol (24) of the length corresponding to the value of the minimum leg length (18) and to display it together with the image (25) of the processing region (13) to scale on the bending edge (28) to be formed on the display device (11).

2. The device according to claim 1, **characterized in that** the camera (12) is arranged, from the point of view of an observer (6) standing in front of the bending machine (1), in a region of the bending machine (1) located behind the bending tools (3, 4).

3. The device according to claim 2, **characterized in that** a camera (12) is arranged in the region lying in front of the bending tools (3, 4) and in the region lying behind the bending tools (3, 4).

4. The device according to one of the preceding claims, **characterized in that** the bending angle measuring device (8-1, 8-2) comprises a non-contact or optically-working angle-measuring system.

5. The device according to one of the preceding claims, **characterized in that** the controller (9) comprises an evaluation program (22) for calculating the bending angle (16) from measurement signals of the bending angle measuring device (8-1, 8-2).

6. The device according to one of the preceding claims, **characterized in that** the bending angle measuring device (8-1, 8-2) comprises a laser for projecting a light line onto a surface of the workpiece (2) and a camera for detecting the projected light line.

7. A method of manufacturing a component by forming a workpiece (2) from sheet metal, having a bending machine (1) with two press beams (5-1, 5-2) aligned parallel to each other and with a lower bending tool (3) and an upper bending tool (4) which are attached to the press beams (5-1, 5-2) opposite one another, wherein the workpiece (2) is processed with the aid of a production program (21) and a controller (9), and wherein a bending angle (16) of the workpiece (2) forming in the region of a bending edge (28) is measured with a bending angle measuring device (8-1, 8-2), and wherein images (25) of a processing region (13) between the bending tools (3, 4) are captured by a camera (12) and the images (25) are displayed on a display device (11), **characterized in that** a graphical length symbol (24) corresponding to the value of a minimum leg length (18) is generated by a program (20) for processing image information, wherein the minimum leg length (18) indicates that smallest value of a leg length (17) of the component to be produced, the bending angle (16) of which can be measured and controlled using the bending angle measuring device (8-1, 8-2), and that the graphical length symbol (24) is displayed together in the image (25) of the processing region (13) to scale and arranged perpendicularly to the bending edge (28) on the display device (11).

8. The method according to claim 7, **characterized in that** values of the minimum leg length (18) are read out from a memory (23) corresponding to the component to be produced.

9. The method according to claim 7 or 8, **characterized in that** a production program (21) of the controller (9) is selected by an operator (6) by an input at an operating terminal (10) and rear stops (7) for aligning the workpiece (2) to be processed and the bending angle measuring device (8-1, 8-2) are positioned by the production program (21).

10. The method according to claim 9, **characterized in that** the operator (6) places the workpiece (2) between the bending tools (3, 4) and aligns it at the rear stops (7), and thereafter, based on the image (25) displayed on the display device (11) and by comparing a position of a rear edge (26) of the workpiece (2) in the displayed image (25) with the graphical length symbol (24), the operator (6) determines whether the forming can be performed using the bending angle measuring device (8-1, 8-2).

## Revendications

1. Dispositif de fabrication d'un composant pour le formage d'une pièce (2) en tôle avec une machine de centrage (1) avec deux barres de pression (5-1, 5-2) orientées parallèlement entre elles et avec un outil de cintrage inférieur (3) et un outil de cintrage supérieur (4), qui sont fixés en face l'un de l'autre aux barres de pression (5-1, 5-2) et avec une caméra (12) pour la prise d'images (25) d'une zone d'usinage (13) entre les outils de cintrage (3, 4) et avec un dispositif d'affichage (11) pour la représentation d'images (25) de la caméra (12) et avec un dispositif de commande (9) avec un programme de fabrication (21) pour le fonctionnement de la machine de cintrage (1) et avec un dispositif de mesure d'angle de cintrage (8-1, 8-2), **caractérisé en ce que** le dispositif de commande (9) comprend une mémoire (23) avec des valeurs d'une longueur de branche minimale (18) correspondant à différentes valeurs d'un angle de cintrage (16) à réaliser sur la pièce (2) et à différents outils de cintrage (3, 4), dans lequel la longueur de branche minimale (18) est la valeur la plus faible d'une longueur de branche (17) du composant à fabriquer, mesurée perpendiculairement par rapport à une arête de cintrage (28) à réaliser, dont l'angle de cintrage (16) peut être mesuré à tout moment du formage à l'aide du dispositif de mesure d'angle de cintrage (8-1, 8-2) et **en ce que** le dispositif de commande (9) comprend un programme (20) pour le traitement d'informations graphiques, dans lequel le programme (20) pour le traitement d'informations graphiques est conçu pour produire un symbole de longueur graphique (24) de la longueur correspondant à la valeur de la longueur de branche minimale (18) et pour la représenter, conjointement avec l'image (25) de la zone d'usinage (13), à l'échelle sur l'arête de cintrage (28) à réaliser sur le dispositif d'affichage (11).

2. Dispositif selon la revendication 1, **caractérisé en ce que** la caméra (12) est disposée, du point de vue d'un observateur (6) se tenant devant la machine de cintrage (1), dans une zone de la machine de cintrage (1) derrière les outils de cintrage (3, 4).

3. Dispositif selon la revendication 2, **caractérisé en ce que**, dans la zone se trouvant devant les outils de cintrage (3, 4) et dans la zone se trouvant derrière les outils de cintrage (3, 4), se trouve une caméra (12).

4. Dispositif selon l'une des revendications précédentes, **caractérisé en ce que** le dispositif de mesure d'angle de cintrage (8-1, 8-2) comprend un système de mesure d'angle fonctionnant de manière optique.

5. Dispositif selon l'une des revendications précédentes, **caractérisé en ce que** le dispositif de commande (9) comprend un programme d'analyse (22) pour le calcul de l'angle de cintrage (16) à partir des signaux de mesure du dispositif de mesure d'angle de cintrage (8-1, 8-2).

6. Dispositif selon l'une des revendications précédentes, **caractérisé en ce que** le dispositif de mesure d'angle de cintrage (8-1, 8-2) comprend un laser pour la projection d'une ligne lumineuse sur une surface de la pièce (2) et une caméra pour la détection de la ligne lumineuse projetée.

7. Procédé de fabrication d'un composant par formage d'une pièce (2) en tôle avec une machine de centrage (1) avec deux barres de pression (5-1, 5-2) orientées parallèlement entre elles et avec un outil de cintrage inférieur (3) et un outil de cintrage supérieur (4), qui sont fixés en face l'un de l'autre aux barres de pression (5-1, 5-2), dans lequel la pièce (2) est usinée à l'aide d'un programme de fabrication (21) et d'un dispositif de commande (9) et dans lequel, avec un dispositif de mesure d'angle de cintrage (8-1, 8-2), un angle de cintrage (16) de la pièce (2), à réaliser au niveau d'une arête de cintrage (28), est mesuré et dans lequel, à l'aide d'une caméra (12), des images (25) d'une zone d'usinage (13) entre les outils de cintrage (3, 4) sont enregistrées et les images (25) sont représentées sur un dispositif d'affichage (11), **caractérisé en ce que**, à l'aide d'un programme (20) pour le traitement d'informations graphiques, un symbole de longueur graphique (24) est généré, qui correspond à la valeur d'une longueur de branche minimale (18), dans lequel la longueur de branche minimale (18) indique la valeur la plus faible d'une longueur de branche (17) du composant à fabriquer, dont l'angle de cintrage (16) peut être mesuré et contrôlé à l'aide du dispositif de mesure d'angle de cintrage (8-1, 8-2) et **en ce que** le symbole de longueur graphique (24) est disposé conjointement dans l'image (25) de la zone d'usinage (13) à l'échelle et perpendiculairement à l'arête de cintrage (28) sur le dispositif d'affichage (11).

8. Procédé selon la revendication 7, **caractérisé en ce que** les valeurs de la longueur de branche minimale (18) sont lues dans une mémoire (23) en fonction du composant à fabriquer.

9. Procédé selon la revendication 7 ou 8, **caractérisé en ce qu'**un opérateur (6) sélectionne, à l'aide d'une entrée au niveau d'un terminal de commande (10), un programme de fabrication (21) du dispositif de commande (9) et les butées arrière (7) pour l'orientation de la pièce (2) sont positionnées par le programme de fabrication (21) à usiner et le dispositif de mesure d'angle de cintrage (8-1, 8-2).

10. Procédé selon la revendication 9, **caractérisé en ce que** l'opérateur (6) insère la pièce (2) entre les outils de cintrage (3, 4) et l'aligne sur les butées arrière (7), puis l'opérateur (6) constate, sur la base de l'image (25) représentée sur le dispositif d'affichage (11) et par comparaison d'une position d'une arête arrière (26) de la pièce (2) dans l'image (25) représentée avec le symbole de longueur graphique (24), si le formage peut être effectué à l'aide du dispositif de mesure d'angle de cintrage (8-1, 8-2).
